# EUROPEAN PATENT APPLICATION

(11) **EP 1 502 904 A1**
(43) Date of publication of application: **02.02.2005**
(21) Application number: 04017754.5
(22) Date of filing: 27.07.2004
(51) Int. Cl.: C04B 35/591, B01D 46/24

(54) **Method for producing a silicon nitride honeycomb filter**

(30) Priority: 31.07.2003 JP 2003284277
(71) Applicant: Asahi Glass Company, Limited, Chiyoda-ku, Tokyo 100-8405 (JP)
(72) Inventor: Matsuzaki, Katsuhiko c/o Asahi Glass Company, Yokohama-shi Kanagawa (JP); Suzuki, Keiichiro c/o Asahi Glass Company, Limited, Yokohama-shi Kanagawa (JP)
(74) Representative: Müller-Boré & Partner Patentanwälte

(57) **Abstract**

A method for producing a silicon nitride honeycomb filter, which comprises heat-treating in a nitrogen atmosphere a honeycomb green body comprising metal silicon particles and a pore-forming agent to convert metal silicon substantially to silicon nitride, wherein the metal silicon particles have a purity of at least 97 mass% and contain at least one metal element selected from the group consisting of Fe, Ca, Mg, Cu, Cr and Ti in a total amount of from 0.1 to 1 mass%.

## Description

The present invention relates to a method for producing a silicon nitride honeycomb filter suitable for removing powder dust, etc. contained in a high temperature exhaust gas.

Silicon nitride has characteristics excellent in heat resistance, corrosion resistance, chemical resistance, mechanical strength, etc. and is expected to be useful for a filter (hereinafter referred to as DPF) for removal of fine particles (hereinafter referred to as particulates) discharged from a diesel engine or for a filter for collection or removal of dust under a high temperature or corrosive environment. Methods for producing such silicon nitride filters may generally be classified on the basis of starting materials into a production method wherein silicon nitride particles are used as the starting material (JP-A-8-59364) and a production method wherein metal silicon particles are used as the starting material (JP-3321621, US Patent 5,004,709, WO01/47833). A production method wherein metal silicon particles are used as the starting material, and silicon nitride is produced by direct nitriding, has a characteristic such that the material cost is usually low as compared with a production method wherein silicon nitride particles are used as the starting material, and thus it is superior from the viewpoint of the production cost.

In a method for producing a silicon nitride filter wherein metal silicon particles are used as the starting material, the properties of the obtainable silicon nitride filter are influenced by the control of the nitriding reaction to nitride metal silicon to silicon nitride. Therefore, JP-3321621 proposes a method of adding a nitriding accelerator such as iron oxide, lead oxide or nickel carbonyl in an amount of from about 0.1 to 7 vol% based on the final volume of a dry aggregate to be formed. US Patent 5,004,709 proposes a method of using iron and a rare earth element oxide in combination as a nitriding accelerator. However, in such a method of using a nitriding accelerator, if the amount of the nitriding accelerator is little, mixing with metal silicon particles tends to be non-uniform, whereby the nitriding accelerator tends to be unevenly distributed. Due to such uneven distribution of the nitriding accelerator, at a portion where the nitriding accelerator is locally concentrated, heat generation accompanying nitriding tends to be abnormally high locally. On the other hand, at a portion where the nitriding accelerator is smaller than the prescribed amount, nitriding will not adequately proceed, and metal silicon particles are likely to remain as they are. As a result, defects are likely to result in the silicon nitride filter, and the properties tend to be non-uniform.

JP3321621 or US Patent 5,004,709 proposes nothing about the purity, etc., of the metal silicon particles as the starting material, other than the particle sizes. Likewise, WO01/47833 proposes nothing specific about the purity of the metal silicon particles, although it proposes an average particle diameter of the metal silicon particles. In any case, there has been no proposal about the metal silicon particles suitable for producing a silicon nitride filter having a large porosity, high mechanical strength and low pressure loss.

It is an object of the present invention to provide a method for producing a silicon nitride honeycomb filter which is excellent in mechanical properties and has a low pressure loss and a particularly high efficiency to collect particulates and which is suitable as DPF by using metal silicon particles as the starting material.

The present invention provides a method for producing a silicon nitride honeycomb filter, which comprises heat-treating in a nitrogen atmosphere a honeycomb green body comprising metal silicon particles and a pore-forming agent to convert metal silicon substantially to silicon nitride, wherein the metal silicon particles have a purity of at least 97 mass% and contain at least one metal element selected from the group consisting of Fe, Ca, Mg, Cu, Cr and Ti in a total amount of from 0.1 to 1 mass%.

In the present invention, the metal silicon particles themselves contain a metal element having a nitriding acceleration effect in a specific amount, whereby even without adding a nitriding accelerating agent, nitriding will be initiated even at a low temperature, and yet, it is possible to present a silicon nitride honeycomb filter without residual metal silicon particles. In a method of adding a nitriding accelerator, the nitriding characteristics may vary depending upon the components and amounts of impurities in the metal silicon particles. Accordingly, the rejection rate of defective products of the silicon nitride honeycomb filter may be increased, or the product quality may be deteriorated by the influence of the starting material lot of the metal silicon particles. Whereas, in the present invention, the metal silicon particles themselves are controlled, whereby production can be constantly carried out by reducing the rejection rate of defective products, and yet, the high quality can be maintained.

Further, in the method wherein metal silicon particles are used as the starting material, control of heat generation accompanying nitriding is important, and if the control of heat generation is not proper, defects are likely to result. In the present invention, nitriding will be initiated at a low temperature, as mentioned above, whereby control of the heat generation is easy and defects are less likely to result, whereby a silicon nitride honeycomb filer having a large porosity, high mechanical strength and high uniformity, can be easily produced.

Further, the silicon nitride filter obtained by the method of the present invention has high strength and is excellent in heat resistance, corrosion resistance and chemical resistance, and thus, is particularly suitable as DPF which is required to have strength, heat resistance, corrosion resistance, durability, etc.

Now, the present invention will be described with reference to the preferred embodiments.

The present inventors have found that in a method for producing a silicon nitride honeycomb filer (hereinafter referred to simply as a honeycomb filter) wherein metal silicon particles are used as the starting material, the rate of good products or the properties of the honeycomb filter as the product may change depending upon the starting material lot of metal silicon particles, and in the course of the study to clarify the cause, it has been found that a certain specific trace amount component in the metal silicon particles is influential over the fluctuation of the nitriding reaction, and the present invention has been accomplished on the basis of this discovery.

The method for producing a honeycomb filter of the present invention (hereinafter referred to as the method of the present invention) is a method for producing a silicon nitride honeycomb filter, which comprises heat-treating in a nitrogen atmosphere a honeycomb green body comprising metal silicon particles and a pore-forming agent to convert metal silicon substantially to silicon nitride, wherein the metal silicon particles have a purity of at least 97 mass% and contain at least one metal element selected from the group consisting of Fe, Ca, Mg, Cu, Cr and Ti in a total amount of from 0.1 to 1 mass%. Metal silicon powders commonly used may be classified into two grades i.e. a grade wherein the content of metal elements such as Fe is larger than in the metal silicon powder defined in the present invention, and a grade wherein the content of metal elements such as Fe is smaller. Namely, the metal silicon powder defined by the present invention has a content of metal elements such as Fe between the two grades.

In the method of the present invention, the purity of the metal silicon particles is at least 97 mass%. If the purity of the metal silicon particles is less than 97 mass%, the amount of silicon nitride particles in the obtained honeycomb filter tends to be small, whereby properties such as heat resistance and corrosion resistance, tend to be low. The purity of the metal silicon particles are preferably at least 97.5 mass%, further preferably at least 98 mass%. Particularly preferably the purity of the metal silicon particles is at least 98.5 mass%.

In the method of the present invention, the metal silicon particles contain from 0.1 to 1 mass% in total of at least one metal element selected from the group consisting of Fe, Ca, Mg, Cu, Cr and Ti. If the total content of at least one metal element selected from the group consisting of Fe, Ca, Mg, Cu, Cr and Ti in the metal silicon particles is less than 0.1 mass%, no adequate effects for accelerating nitriding of metal silicon particles tends to be obtained. On the other hand, if the total content of at least one metal element selected from the group consisting of Fe, Ca, Mg, Cu, Cr and Ti exceeds 1 mass%, the properties of the honeycomb filter may be adversely affected. The lower limit of the total amount of at least one metal element selected from the group consisting of Fe, Ca, Mg, Cu, Cr and Ti in the metal silicon particles, is preferably 0.2 mass%, more preferably 0.3 mass%. The upper limit of the content is preferably 0.9 mass%, more preferably 0.8 mass%.

In the method of the present invention, the content of metal elements other than Si, Fe, Ca, Mg, Cu, Cr and Ti contained in the metal silicon is preferably at most 2 mass%, whereby there will be no adverse effect to the properties of the honeycomb filter.

In the method of the present invention, the component contained in the metal silicon particles is preferably one containing metal elements of Fe and Ca in a total amount of from 0.1 to 1 mass%, whereby the nitriding acceleration effect for metal silicon particles can be obtained with a small content. Further, it is preferred that the component contained in the metal silicon particles is metal elements of Fe and Ca, and the content of the metal element of Fe is larger than the content of the metal element of Ca, whereby preparation of such metal silicon particles will be easy. Metal silicon particles having a small content of Fe are not readily available, but metal silicon particles having a small content of Ca are readily available. Accordingly, a preparation method of incorporating metal silicon particles having a large content of Fe to the metal silicon particles having a small content of Ca, may be mentioned as a preferred preparation method. For example, metal silicon particles having a Ca content of less than 0.1 mass% and a Fe content of from 0.1 to 1 mass%, may be mentioned as a preferred example.

Further, the method for determining the amounts of components in the metal silicon particles is not particularly limited, and a quantitative analysis such as a fluorescent X-ray analysis, an atomic absorption analysis, an ICP emission spectrometry or an atomic fluorescent analysis may be mentioned as a preferred measuring method.

As a typical method for producing the metal silicon particles to be used in the method of the present invention, a method may, for example, be mentioned wherein SiO₂ sand is reduced to obtain blocks of metal silicon, which will then be mechanically pulverized, followed by classification or mixing, as the case requires, to obtain the prescribed metal silicon particles. In such a case, the components and amounts of impurities contained in the metal silicon particles vary depending upon the production areas of SiO₂ sand, and accordingly, there may be a case where it is not necessarily possible to obtain metal silicon particles containing the predetermined amounts of the predetermined components. In such a case, metal silicon particles of a high purity prepared by increasing the purity by acid treatment, may be mixed for adjustment so that the metal silicon particles as a whole will contain the prescribed amounts of the prescribed components.

In the method of the present invention, a honeycomb green body is used which comprises the specific metal silicon particles as described above (hereinafter referred to simply as the specific metal silicon particles) and a pore-forming agent. In this specification, the honeycomb green body is meant for a green body having a honeycomb structure.

In the method of the present invention, in the honeycomb green body, the content of the specific metal silicon particles is preferably from 60 to 95 mass%, and the content of the pore-forming agent is preferably from 5 to 40 mass%. If the content of the metal silicon particles in the honeycomb green body is less than 60 mass%, the porosity of the silicon nitride filter thereby obtainable tends to be too large, whereby the mechanical strength tends to be inadequate for practical use. On the other hand, if the content of the metal silicon particles in the green body exceeds 95 mass%, the porosity of the silicon nitride filter tends to be too small, whereby no adequate function as a filter may be obtained.

In the method of the present invention, the average particle diameter of the specific metal silicon particles is preferably from 10 to 75 µm. If the average particle diameter of the specific metal silicon particles is less than 10 µm, the average pore diameter of the obtainable film will be at most 5 µm, such being undesirable. On the other hand, if the average particle diameter of the metal silicon particles exceeds 75 µm, the average pore diameter of the obtainable silicon nitride filter may become large, but nitriding may not necessarily be sufficient, such being undesirable. The average particle size of the specific metal silicon particles is more preferably from 15 to 65 µm, and the average particle diameter of the specific metal silicon particles is particularly preferably from 20 to 60 µm.

The metal silicon particles to be used in the method of the present invention not only have an average particle size of from 10 to 75 µm, but also are preferably such that particles having particle diameters of from 1 to 100 µm are at least 70 mass% in all metal silicon particles. When those having particle diameters within a range of from 1 to 100 µm are at least 70 mass% in all metal silicon particles, pores having pore diameters of at most 5 µm will be few in the obtainable silicon nitride filter, whereby the pressure loss can be reduced, and it will be possible to efficiently arrest particulates, etc. which have agglomerated particle diameters of at least 10 µm. Those having particle diameters within a range of from 1 to 100 µm are more preferably at least 85 mass% in all metal silicon particles, particularly preferably at least 95 mass% in all metal silicon particles.

In the method of the present invention, the specific metal silicon particles are preferably such that those having particle diameters within a range of from 10 to 90 µm are at least 75 mass%. The specific metal silicon particles are more preferably such that those having particle diameters within a range of from 20 to 80 µm are at least 75 mass%. The metal silicon particles are particularly preferably such that those having particle sizes within a range of from 20 to 80 µm are at least 95 mass%. Metal silicon particles having such a particle size distribution within such a specific range may be obtained by using air stream classification or a classification means such as a sieve. Further, in this specification, the particle diameter and the average particle diameter are meant for the values obtained by a laser diffraction particle size distribution measuring apparatus.

In the method of the present invention, the pore-forming agent is not particularly limited, so long as it is capable of forming pores. However, it is preferably oxide ceramic hollow particles (hereinafter referred to simply as hollow particles) and/or a dissipative pore-forming agent, whereby desired pores can be formed with a small amount of addition. The content of the pore-forming agent is from 5 to 40 mass% in the honeycomb green body. If the content of the pore-forming agent in the honeycomb green body is less than 5 mass%, the porosity of the silicon nitride filter tends to be too low, whereby a function as a filter may not be obtained. On the other hand, if the content of the pore-forming agent in the green body exceeds 40 mass%, the porosity of the silicon nitride filter tends to be too high, whereby the mechanical strength tends to be inadequate for a practical use.

As the above-mentioned hollow particles, crystalline or amorphous particles may suitably be used so long as they form pores at the time of heat treatment and they serve as a sintering aid to silicon nitride particles formed in the heat treatment process. The hollow particles are preferably those composed mainly of an oxide of at least one metal selected from the group consisting of Al, Si, Ca, Sr, Ba, Mg and Y, since the effect as a sintering aid will thereby be high. The porous particles may have a portion corresponding to the outer shell being dense or porous so long as they are hollow. However, ones having the portion corresponding to the outer shell being dense, are preferred from the viewpoint of availability. Further, the hollow particles are preferably spherical particles as their outer shape, since such particles are readily available. However, particles other than spherical particles may be acceptable so long as they are hollow.

As the above-mentioned dissipative pore-forming agent, an organic or inorganic material may suitably be used so long as it dissipates upon e.g. decomposition at the time of the heat treatment thereby to form pores. It is preferred that the dissipative pore-forming agent is organic polymer particles, particularly thermally decomposable polymer particles, since they will decompose and dissipate in the heat treatment process and will not retain a residue in the sintered body and thus they do not impair the properties of the obtainable silicon nitride filter. A material which may be thermally decomposed and burned off, may suitably be used. For example, an acrylic resin, a polyvinyl acetate resin or a silicone resin may be mentioned.

The average particle diameters of the hollow particles and the organic polymer particles are preferably from 10 to 100 µm, whereby the porosity of the obtainable silicon nitride filter will be high, and yet the strength will be secured. If the average particle diameter of the hollow particles, etc. is less than 10 µm, the contribution to formation of pores will decrease. On the other hand, if the average particle diameter of the hollow particles, etc. exceeds 100 µm, the strength of the obtainable silicon nitride filter tends to be inadequate, such being undesirable.

In the method of the present invention, in addition to the specific metal silicon particles and pore-forming agent, iron oxide particles, etc. which have a nitriding accelerating effect may be incorporated.

In the method of the present invention, the pore-forming agent and the metal silicon particles may be mixed by using a common mixing means such as a ball mill or a mixer. As a method for preparing the green body comprising the pore-forming agent and the metal silicon particles, a usual ceramic-molding method such as press molding, extrusion molding or cast molding may suitably be employed. Further, at the time of molding, an organic binder may be added. As such an organic binder, an organic substance may be used such as polyvinyl alcohol or its modified product, starch or its modified product, carboxymethylcellulose, hydroxymethylcellulose, polyvinyl pyrrolidone, an acrylic acid or an acrylic copolymer, a vinyl acetate resin or a vinyl acetate copolymer.

As a condition for the heat treatment of the molded product, preferred is heat treatment in two stages in a nitrogen atmosphere, i.e. it is preferably divided into a first stage suitable for nitriding metal silicon particles and a second stage suitable for sintering silicon nitride particles as the formed nitride.

As the heat treatment condition for the first stage, it is preferred to maintain the molded product in a nitrogen atmosphere at a temperature of from 1,150 to 1,400°C for from 4 to 12 hours. If the temperature is lower than 1,150°C, no adequate nitriding of metal silicon particles takes place. On the other hand, if the temperature exceeds 1,400°C, metal silicon particles tend to fuse in the vicinity of the melting point (1,410°C) of metal silicon, whereby the shape of the sintered body can not be maintained, such being undesirable. If the time for maintaining at the temperature is less than 4 hours, nitriding of metal silicon particles tends to be inadequate, such being undesirable. On the other hand, if the time for maintaining at such a temperature exceeds 12 hours, the nitriding reaction will no longer substantially proceed, and the operation cost will increase, such being undesirable.

As the condition for the heat treatment in the second stage, it is preferred to maintain the molded product in a nitrogen atmosphere at a temperature of from 1,500 to 1,800°C for from 1 to 12 hours. If the temperature is less than 1,500°C, no adequate sintering of the silicon nitride particles will proceed, such being undesirable, and if it exceeds 1,800°C, the silicon nitride particles tend to decompose, such being undesirable. If the time for maintaining at such a temperature is less than 1 hour, no adequate sintering of the particles to one another will proceed, such being undesirable. On the other hand, if it exceeds 12 hours, silicon nitride tends to decompose especially at a high temperature, such being undesirable. Further, the heat treatment in the first stage or in the second stage, may be carried out by once lowering the temperature at an intermediate point or may be carried out continuously without lowering the temperature.

The temperature raising rate at the time of the heat treatment may suitably be selected depending upon the size, shape, etc. of the molded product, but it is preferably from 50 to 600°C/hr from the viewpoint of the nitriding rate or the pore diameters. Even in a temperature-raising process, so long as the temperature is within the temperature range defined for the first stage or the second stage, the time thereby passed will be included in the time for maintaining in the first or the second stage. Here, the nitrogen atmosphere is meant for an atmosphere which contains substantially nitrogen only and contains no oxygen, but it may contain other inert gases. The nitrogen partial pressure is preferably at least 50 kPa.

Now, the present invention will be described in further detail with reference to Examples. However, it should be understood that the present invention is by no means restricted to such specific Examples.

Now, Examples of the present invention (Examples 1 and 2) and Comparative Example (Example 3) are shown. The obtained porous bodies were evaluated by the following evaluation methods.

### Evaluation methods

Porosity: Calculated by an Archimedes method.

Average pore diameter: Measured by a mercury porosimeter (AUTOSCAN-33, manufactured by Yuasa Ionics Inc.).

Crystal phase: Identified by an X-ray diffraction apparatus (tradename: GAIGERFLEX RAD-IIA, manufactured by Rigaku Corporation).

Room temperature strength: From a filter prepared to have a honeycomb structure, a test specimen comprising 7×7 cells and having a length of 12 mm, was cut out, and a load was applied at an application rate of 0.5 mm/min in parallel with the extrusion direction, whereby the room temperature strength was measured as a compression strength.

Particle diameter: Measured by a laser diffraction particle size distribution measuring apparatus (tradename: Microtrac HRA, manufactured by NIKKISO CO., LTD)

Amount of impurities in metal silicon particles: By fluorescent X-ray analysis.

### EXAMPLE 1 (THE PRESENT INVENTION)

18 parts by mass of methyl cellulose and 55 parts by mass of deionized water were added to 100 parts by mass of a powder for a green body comprising 77 mass% of metal silicon particles A having an average particle diameter of 23 µm (tradename: Silgrain F type, manufactured by Elkem Corporation, the purity and breakdown of impurities are disclosed in the column for particles A in Table 1) wherein metal silicon particles having particle diameters of from 1 to 100 µm were at least 99 mass%, and 23 mass% of spherical silica-alumina glass hollow particles having an average particle diameter of 45 µm, as a pore-forming agent, to obtain a material for extrusion molding.

The above extrusion molding material was extrusion-molded into a green body having a honeycomb structure by means of a vacuum extruder and then dried at 100°C. The dried honeycomb green body was heated to 1350°C at a temperature raising rate of 2°C/min in a nitrogen atmosphere and maintained for 4 hours to carry out heat treatment of the first stage, and it was further heated to a temperature of 1700°C at a temperature raising rate of 4°C/min and maintained for 4 hours to obtain a porous silicon nitride honeycomb sintered body. The obtained porous body was measured by X-ray diffraction, whereby the diffraction peak of silicon nitride was identified, but no diffraction peak of metal silicon was observed. Further, as a pore characteristic of the obtained porous body, the porosity was 60%. The room temperature strength of the obtained porous body was 15 MPa. Further, the appearance was visually observed, whereby defects such as cracks were not observed.

### EXAMPLE 2 (THE PRESENT INVENTION)

The operation was carried out in the same manner as in Example 1 except that in Example 1, metal silicon particles A were changed to metal silicon particles B having an average particle diameter of 20 µm (tradename: 350, manufactured by YAMAISHI METALS CO. LTD., the purity and breakdown of impurities are shown in the column for particles B in Table 1) wherein metal silicon particles having particle diameters of from 1 to 100 µm were at least 99 mass%. As pore characteristics of the porous body obtained, the porosity was 58%, and the average pore diameter was 11 µm. The room temperature strength of the obtained porous body was 18 MPa. Also in this case, the appearance was visually observed, whereby defects such as cracks were not observed.

### EXAMPLE 3 (COMPARATIVE EXAMPLE)

The operation was carried out in the same manner as in Example 1 except that in Example 1, metal silicon particles A were changed to metal silicon particles C having an average particle diameter of 21 µm (tradename: Silgrain standard type, manufactured by Elkem Corporation, the purity and breakdown of impurities are shown in the column for particles C in Table 1), wherein metal silicon particles having particle diameters of from 1 to 100 µm were at least 99 mass%. As pore characteristics of the obtained porous body, the porosity was 60%, and the average pore diameter was 11 µm. The room temperature strength of the obtained porous body was 7 MPa. Further, the appearance was visually observed, whereby many cracks were observed inside.

**Table 1**

| Contents in metal silicon (mass%) | Particles A | Particles B | Particles C |
|---|---|---|---|
| Fe | 0.50 | 0.40 | 0.03 |
| Ca | 0.05 | 0.30 | 0.01 |
| Mg | 0.01 | 0.01 | 0.01 |
| Cu | 0.01 | 0.01 | 0.01 |
| Cr | 0.01 | 0.02 | 0.01 |
| Ti | 0.01 | 0.01 | 0.01 |
| Other metals | 0.42 | 0.40 | 0.20 |
| C, O | 1.30 | 0.90 | 0.20 |
| Total | 2.31 | 2.05 | 0.48 |

The present invention is a method for producing a silicon nitride filter characterized in that metal silicon having a certain specific particle size distribution is used as a starting material, and it is nitrided to silicon nitride, and thus is applicable to a process for producing a filter suitable as DPF, which is excellent in mechanical properties and which has a particularly low pressure loss and high efficiency for collecting particulates.

The entire disclosure of Japanese Patent Application No. 2003-284277 filed on July 31, 2003 including specification, claims and summary is incorporated herein by reference in its entirety.

## Claims

1. A method for producing a silicon nitride honeycomb filter, which comprises heat-treating in a nitrogen atmosphere a honeycomb green body comprising metal silicon particles and a pore-forming agent to convert metal silicon substantially to silicon nitride, wherein the metal silicon particles have a purity of at least 97 mass% and contain at least one metal element selected from the group consisting of Fe, Ca, Mg, Cu, Cr and Ti in a total amount of from 0.1 to 1 mass%.

2. The method for producing a silicon nitride honeycomb filter according to Claim 1, wherein the metal silicon particles contain metal elements of Fe and Ca in a total amount of from 0.1 to 1 mass%.

3. The method for producing a silicon nitride honeycomb filter according to Claim 2, wherein the content of Ca is less than 0.1 mass%, and the content of Fe is from 0.1 to 1 mass%.

4. The method for producing a silicon nitride honeycomb filter according to Claim 1, 2 or 3, wherein the content of metal elements other than Si, Fe, Ca, Mg, Cu, Cr and Ti in the metal silicon particles is at most 2 mass%.

5. The method for producing a silicon nitride honeycomb filter according to Claim 1, 2, 3 or 4, wherein the metal silicon particles have an average particle diameter of from 10 to 75 µm.

6. The method for producing a silicon nitride honeycomb filter according to any one of Claims 1 to 5, wherein in the metal silicon particles, metal silicon particles having particle diameters of from 1 to 100 µm are at least 70 mass% in all metal silicon particles.

7. The method for producing a silicon nitride honeycomb filter according to any one of Claims 1 to 6, wherein the honeycomb green body comprises from 60 to 95 mass% of metal silicon particles and from 5 to 40 mass% of a pore-forming agent.

8. The method for producing a silicon nitride honeycomb filter according to Claim 7, wherein as the pore-forming agent, metal oxide ceramic hollow particles and/or organic polymer particles are used.

9. The method for producing a silicon nitride honeycomb filter according to Claim 8, wherein the average particle diameter of the metal oxide ceramic hollow particles or organic polymer particles is from 10 to 100 µm.

10. The method for producing a silicon nitride honeycomb filter according to any one of Claims 1 to 9, wherein the heat-treatment conditions are such that heat treatment of a first stage is carried out by maintaining the green body in a nitrogen atmosphere at a temperature of from 1150 to 1400°C for from 4 to 12 hours, and then, heat treatment of a second stage is further carried out by maintaining it at a temperature within a range of from 1500 to 1800°C for from 1 to 12 hours.
